# EUROPÄISCHE PATENTSCHRIFT

(11) **EP 0 867 250 B1**
(45) Veröffentlichungstag und Bekanntmachung des Hinweises auf die Patenterteilung: **19.05.2004**
(21) Anmeldenummer: 98104887.9
(22) Anmeldetag: 18.03.1998
(51) Int. Cl.: B23D 53/04, B23D 59/00

(54) **Bandsäge mit geneigtem Sägeblatt**
Band saw with inclined band saw blade
Scie à ruban à lame de scie inclinée

(30) Priorität: 26.03.1997 DE 19712695; 04.03.1998 DE 19808971
(43) Veröffentlichungstag der Anmeldung: 30.09.1998
(73) Patentinhaber: Siempelkamp Handling Systeme GmbH & Co., 82515 Wolfratshausen (DE)
(72) Erfinder:
(74) Vertreter: Honke, Manfred, Dr.-Ing.

(56) Entgegenhaltungen:
- EP-A- 0 132 837
- DE-A- 2 538 718
- DE-A- 4 310 691
- FR-A- 1 064 207
- US-A- 5 410 934

## Beschreibung

Die Erfindung betrifft eine Bandsäge zum Abtrennen von kontinuierlich erzeugten Sandwichelementen mit starren Deckschichten und einem Sandwichkern, mit
- einem Sägerahmen mit zumindest einer oberen und einer unteren Sägebandrolle für ein über die Sägebandrollen umlaufendes Sägeband mit beidseitig eines Schnittbereiches angeordneten Sägebandführungen, und mit
- einer Schrägführung für das Sägeband im Schnittbereich,
wobei die Schrägführung einen einstellbaren Schnittwinkel (α) vorgibt.

Es ist eine Wand- oder Gattersäge zum Sägen von langgestreckten Holzwerkstücken mit Fasern bekannt, die in Richtung der Längserstreckung des Holzwerkstückes verlaufen. Das zu sägende Holzwerkstück wird mit einem Vorschubtisch dem angetriebenen Sägeband oder -gatter so zugeführt, dass die Fasern des Holzwerkstückes mit einer senkrecht zum Sägeband oder -gatter verlaufenden Linie einen spitzen Winkel bilden. Die Winkelstellung zwischen dem Sägeband bzw. -gatter und der Faserrichtung ist stufenweise einstellbar und hängt von der Holzart und der Holzhärte ab. Die Winkelstellung kann erreicht werden, indem das Sägeband oder -gatter aus einer Vertikalen in eine Schräglage verbracht wird. Es besteht aber auch die Möglichkeit, den Vorschubschlitten oder das Sägeband und -gatter und den Vorschubschlitten zu neigen. Auf diese Weise will man die Vorschubgeschwindigkeit vergrößern (vgl. EP 0 132 837 A1).

Ferner kennt man eine Bandsäge mit diagonal laufendem Sägeband, bei welcher ein endloses Sägeband mit Führungsrollen diagonal über einen Auflagetisch angeordnet ist und zwischen einer oberen und einer unteren Führungsrolle eine Auslenkung aufweist, welche der Richtung der Schneidelinie entspricht. Auf diese Weise will man Materialabschnitte mit beliebigen Teillängen herstellen (vgl. DE 25 38 718 A). Aus dem gleichen Grunde kennt man eine Bandsäge, bei welcher das Sägeband um bis zu 90° verdrehbar ist (vgl. US 5 410 934 A).

Außerdem ist eine Absaugvorrichtung für Bandsägen mit einem Absaugtrichter und einem rohrförmigen Anschlussstutzen für die Verbindung mit einer Absaugleitung bekannt. Der haubenförmige Absaugtrichter ist oberhalb eines Maschinentisches angeordnet und in seiner zum Maschinentisch gerichteten Seite offen. Außerdem sind an den Seitenrändern und an dem vom Sägeblatt abgewandten Rand der Öffnung Bürstendichtungen vorgesehen. Mit einer solchen Absaugrichtung will man die Staubkonzentration oberhalb des Maschinentisches wesentlich reduzieren (vgl. DE 43 10 691 A.

Der Erfindung liegt die Aufgabe zugrunde, eine Bandsäge der eingangs beschriebenen Ausführungsform zu schaffen, die sich durch eine verbesserte Schnittqualität und hohe Standzeit des Sägebandes auszeichnet.

Diese Aufgabe löst die Erfindung bei einer gattungsgemäßen Bandsäge dadurch, dass die obere/untere Sägebandrolle zur Winkelverstellung des Sägebandes in dem Sägerahmen verstellbar gelagert und in der jeweils eingenommenen Stellung feststellbar ist. - Diese Maßnahmen der Erfindung haben zur Folge, dass mittels der Sägebandrollen der Schnittwinkel des Sägebandes so verstellt werden kann, dass das Sägeband mit einem flachen Schnittwinkel in das Sandwichelement eingreift und folglich ein weicher und verschleißarmer Eingriff gewährleistet ist. Ein nach Lehre der Erfindung erreichter flacher Schnittwinkel ist insbes. in schwingungstechnischer Hinsicht vorteilhaft, wenn die Sandwichelemente starre Deckschichten und einen Sandwichkern aus geschäumtem Kunststoff, Mineralwolle, Glaswolle o. dgl. aufweisen. Während die Deckschichten bei einem rechteckigen Zahneingriff des Sägebandes in Schwingungen versetzt werden und diese Schwingungen umso kritischer sind, je weicher der Sandwichkern bzw. seine Füllung ist, wird nach Lehre der Erfindung durch den flachen Schnittwinkel und folglich weichen Zahneingriff ein schwingungsarmer Schnitt erreicht und folglich ein einwandfreier Sägeschnitt erzielt. Das ist selbst dann der Fall, wenn der Verbund zwischen den starren Deckschichten - bei denen es sich um Metallschichten handelt - und dem Sandwichkern nicht optimal ist. - Im Ergebnis zeichnet sich die erfindungsgemäße Bandsäge durch erhöhte Schnittqualität und insbesondere Standzeit und folglich Lebensdauer aus.

Weitere vorteilhafte Maßnahmen sind im Folgenden aufgeführt.

So kann der Schnittwinkel 30 bis 60°, vorzugsweise 45° gegen die Werkstückebene betragen. Ferner besteht die Möglichkeit, dass der Sägetisch mit dem Sandwichelement außerhalb oder innerhalb des endlos umlaufenden Sägebandes angeordnet ist. Bei gleicher Umlaufrichtung des Sägebandes sind die Sägebandführungen zweckmäßigerweise als gleichsinnig um 180° verdrehbare Wendevorrichtungen ausgebildet, so dass sowohl ein außerhalb des umlaufenden Sägebandes befindliches Sandwichelement als auch ein innerhalb des Sägebandes befindliches Sandwichelement mit dem gleichen Sägeband geschnitten werden kann. - Die erfindungsgemäße Bandsäge arbeitet selbst dann verschleißarm, wenn Sandwichelemente mit konischen, im Wesentlichen orthogonal zum Sägeverlauf verlaufenden, Sicken abgetrennt werden sollen. Denn das jeweilige Sandwichelement ist vorzugsweise auf dem Sägetisch in Bezug auf das Sägeband winkelverstellbar und in der eingenommenen Schrägstellung feststellbar. Im Rahmen der Erfindung kann aber auch der Sägetisch mit dem Sandwichelement in Bezug auf das Sägeband winkelverstellbar gelagert und in der eingenommenen Schrägstellung feststellbar sein. Stets lässt sich eine hinreichende Winkeldifferenz zwischen der Sickenschräge und dem Schnittwinkel des Sägebandes derart einstellen, dass der Schnittdruck verhältnismäßig gering bleibt, jedenfalls nicht so stark ansteigt, dass das Sägeband dem alsbaldigen Verschleiß unterliegt.

Nach einem weiteren Vorschlag ist vorgesehen, dass dem Sägeband eine in seinen Schnittbereich führende Absaugvorrichtung zugeordnet ist, um die Sägespäne einwandfrei und ohne Umweltverschmutzung abführen zu können. Dabei kann die Absaugvorrichtung in dem Sägeband auslaufseitigen Randbereich des Schnittbereiches dem Sägeband ein- oder beidseitig zugeordnete Absaughauben oder -stutzen mit sich anschließenden Absaugkanälen aufweisen. Auch der dem Schnittbereich abgewandten Sägebandrolle kann eine Absaughaube oder ein Absaugstutzen mit einem sich anschließenden Absaugkanal zugeordnet sein, um von dem Sägeband bis dahin mitgeführte Sägespäne endgültig abzusaugen um deren Umlauf und erneutes Eintreten in den Schnittbereich zu verhindern.

Im Folgenden wird die Erfindung anhand einer lediglich ein Ausführungsbeispiel darstellenden Zeichnung näher erläutert; es zeigen:

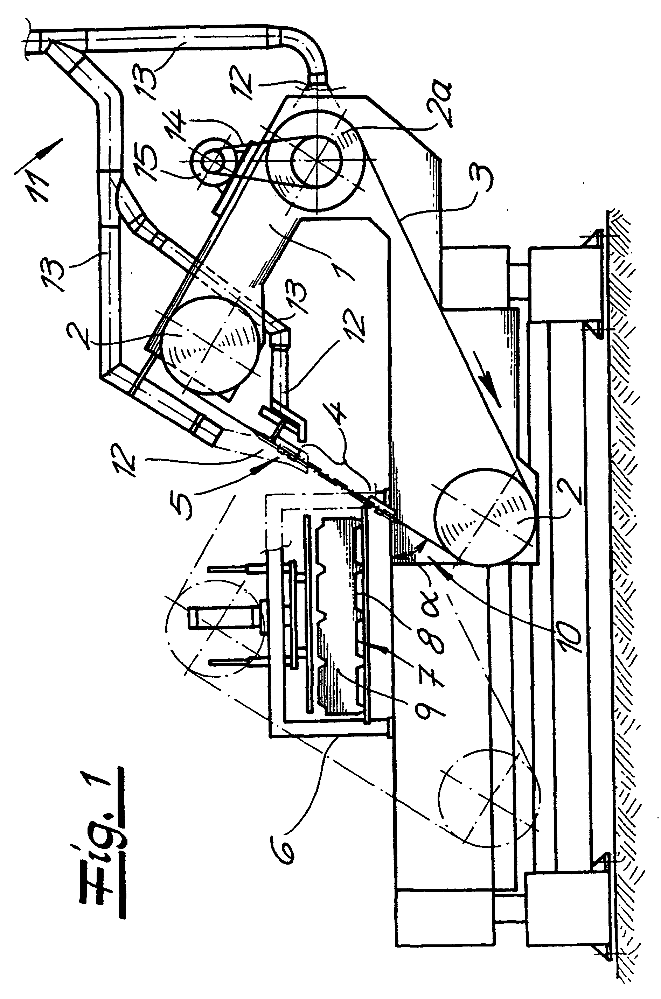

- Fig. 1: eine Bandsäge in schematischer Seitenansicht,
- Fig. 2: eine Prinzipskizze für den Gegenstand nach Fig. 1 mit außerhalb des Sägebandes zu schneidendem Werkstück und im Uhrzeigersinn umlaufendem Sägeband,

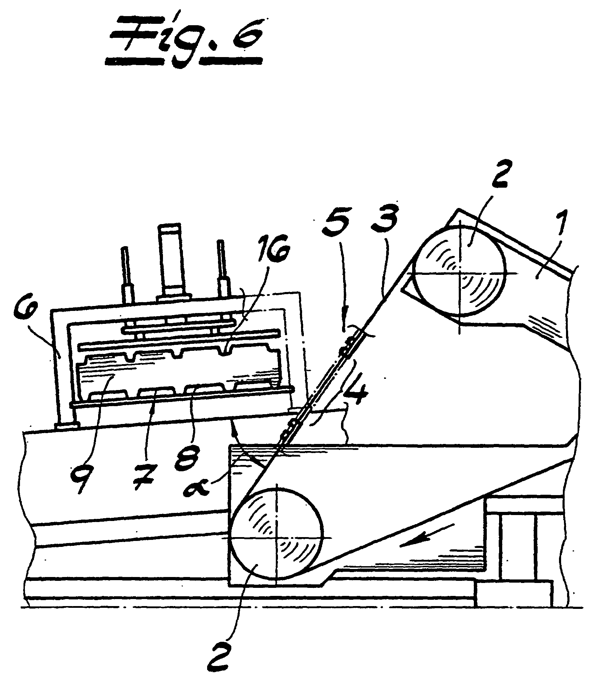

- Fig. 3: ausschnittsweise den Zahneingriff für die Ausführungsform nach Fig. 2,
- Fig. 4: den Gegenstand nach Fig. 2 mit einer angedeuteten Wendevorrichtung und innerhalb des umlaufenden Sägebandes angeordnetem Werkstück,
- Fig. 5: eine abgewandelte Ausführungsform des Gegenstandes nach Fig. 2,
- Fig. 6: einen Ausschnitt nach dem Gegenstand nach Fig. 1 mit angedeuteter Winkelverstellung für den Sägetisch bzw. das werkstück und

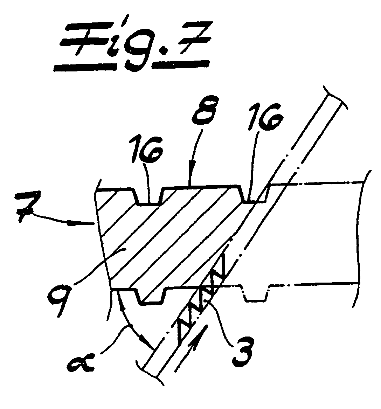

- Fig. 7: eine Prinzipskizze, welche die Winkeldifferenz zwischen der Sickenschräge bzw. -konizität und dem Schnittwinkel verdeutlicht.

In den Figuren ist eine Bandsäge mit einem C-förmigen Sägerahmen 1 mit Sägebandrollen 2 für ein über die Sägebandrollen 2 umlaufendes und über eine der Sägebandrollen 2 angetriebenes Sägeband 3 mit beidseitig eines in der C-Öffnung des Sägerahmens 1 befindlichen Schnittbereiches 4 angeordneten Sägebandführungen 5 dargestellt. Dem Sägerahmen 1 ist ein Sägetisch 6 zum Einspannen des jeweils zu sägenden Werkstückes 7 zugeordnet. Nach dem Ausführungsbeispiel handelt es sich bei dem Werkstück um ein Sandwichelement 7, dessen starre Deckschichten 8 aus Blechen mit konischer Verrippung und dessen Sandwichkern 9 aus geschäumtem Kunststoff, Dämmaterial o. dgl. besteht. Für das Sägeband 3 ist im Schnittbereich 4 eine Schrägführung 10 mit einem vorgegebenen Schnittwinkel α vorgesehen, so dass ein schwingungsarmer Sägeschnitt gewährleistet ist. Der Schnittwinkel α beträgt nach dem Ausführungsbeispiel etwa 56°. Der Sägerahmen 1 ist quer gegen das auf dem ortsfesten Sägetisch 6 eingespannte Sandwichelement 7 verfahrbar. Die Endposition des Sägerahmens 1 nach erfolgtem Sägeschnitt ist gestrichelt angedeutet. Nach dem Ausführungsbeispiel befindet sich der Sägetisch 6 mit dem Sandwichelement 7 außerhalb des endlos umlaufenden Sägebandes 3. Die Sägebandführungen 5 können jedoch als gleichsinnig um 180° verdrehbare Wendevorrichtungen ausgebildet sein, um auch ein innerhalb des endlos umlaufenden Sägebandes 3 auf einem Sägetisch 6 eingespanntes Sandwichelement 7 schneiden zu können.

Dem Sägeband 3 bzw. Bandsägeblatt ist eine in seinen Schnittbereich 4 führende Absaugvorrichtung 11 zugeordnet. Die Absaugvorrichtung 11 weist in dem sägebandauslaufseitigen Randbereich des Schnittbereiches 4 dem Sägeband 3 ein- oder beidseitig zugeordnete Absaughauben 12 oder Absaugstutzen mit sich anschließenden Absaugkanälen 13 auf. Auch der dem Schnittbereich 4 abgewandten Sägebandrolle 2a ist eine trichterartige Absaughaube 12 mit einem sich anschließenden Absaugkanal 13 zugeordnet. Diese Sägebandrolle 2a wird im übrigen über einen Riementrieb 14 von einem Antriebsmotor 15 angetrieben und sorgt folglich für den Umlauf des Sägebandes 3 in Pfeilrichtung.

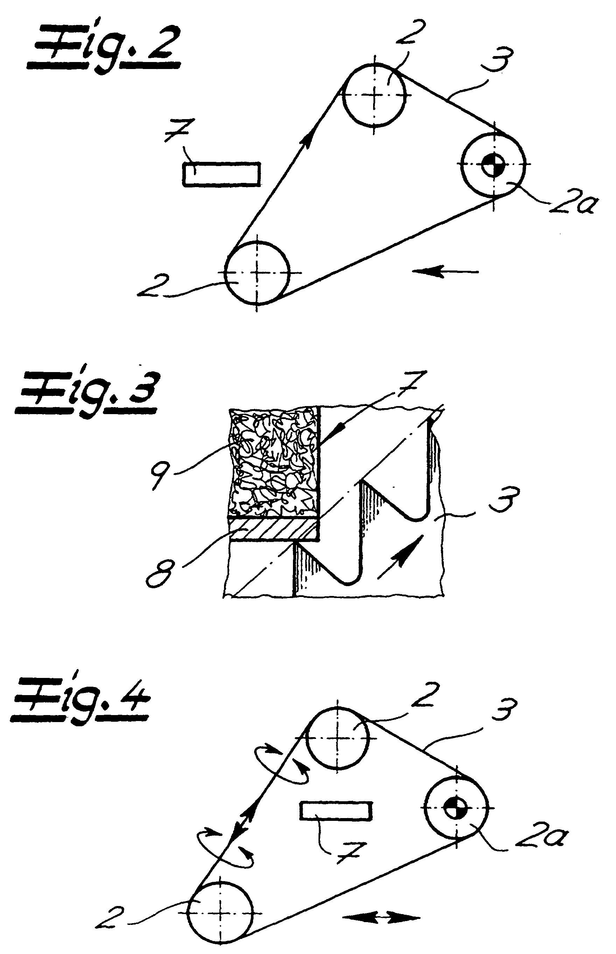

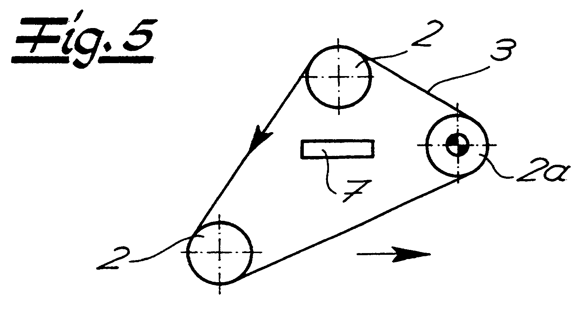

Während bei der Ausführungsform nach Fig. 2 das Sägeband 3 im Uhrzeigersinn umläuft, zeigt Fig. 5 eine Ausführungsform mit gegen den Uhrzeigersinn umlaufendem Sägeband 3. Im letzteren Fall ist die Absaugvorrichtung 11 vorzugsweise unterhalb der Bandsäge angeordnet, um die anfallenden Späne absaugen zu können.

Bei der konischen Verrippung des Sandwichelementes 7 handelt es sich um Sicken 16.

Die Sicken 16 verlaufen im wesentlichen orthogonal zu dem Sägeband 3 und folglich zu dem Sägeschnitt. Der Schnittwinkel α ist einstellbar. Dazu ist das Sägeband 3 in bezug auf das Werkstück bzw. betreffende Sandwichelement 7 winkelverstellbar gelagert.

Aber auch das Werkstück bzw. Sandwichelement 7 kann auf dem Sägetisch 6 in bezug auf das Sägeband 3 winkelverstellbar und in der eingenommenen Schrägstellung feststellbar, z. B. einspannbar sein. Nach einer anderen Variante ist der gesamte Sägetisch 6 mit dem Werkstück bzw. Sandwichelement 7 in bezug auf das Sägeband 3 winkelverstellbar gelagert und in der eingenommenen Schrägstellung feststellbar. Stets läßt sich die Winkeldifferenz zwischen der Sickenschräge bzw. -konizität der Sandwichelemente 7 und dem Schnittwinkel α des Sägebandes 3 hinreichend groß derart einstellen, dass die Bandsäge mit einem verhältnismäßig niedrigen Schnittdruck arbeitet und folglich das Sägeband 3 nicht länger einem alsbaldigen Verschleiß unterliegt.

Unter Berücksichtigung der Tatsache, dass das Sägeband 3 in dem Sägerahmen 1 eine obere und untere Sägebandrolle 2 umläuft, ist die obere und/oder untere Sägebandrolle 2 zur Winkelverstellung des Sägebandes 3 in dem Sägerahmen 1 verstellbar gelagert und in der jeweils eingenommenen Stellung feststellbar. Da die Sägebänder 3 regelmäßig vor Ort geschweißt werden, besteht kein Problem darin, über eine verstellbare Sägebandrolle 2 den Spannweg für das Sägeband 3 unter Berücksichtigung des einzustellenden Schnittwinkels zu vergrößern oder zu verkleinern und in Abhängigkeit davon ein längeres oder kürzeres Sägeband 3 einzusetzen.

## Patentansprüche

1. Bandsäge zum Abtrennen von kontinuierlich erzeugten Sandwichelementen mit starren Deckschichten und einem Sandwichkern, mit
- einem Sägerahmen (1) mit zumindest einer oberen und einer unteren Sägebandrolle (2) für ein über die Sägebandrollen (2) umlaufendes Sägeband (3) mit beidseitig eines Schnittbereiches (4) angeordneten Sägebandführungen (5), und mit
- einer Schrägführung (10) für das Sägeband (3) im Schnittbereich (4),
wobei die Schrägführung (10) einen einstellbaren Schnittwinkel (α) vorgibt,
**dadurch gekennzeichnet, dass** die obere und/oder untere Sägebandrolle (2) zur Winkelverstellung des Sägebandes (3) in dem Sägerahmen (1) verstellbar gelagert und in der jeweils eingenommenen Stellung feststellbar ist.

2. Bandsäge nach Anspruch 1, **dadurch gekennzeichnet, dass** der Schnittwinkel (α) 30 bis 60°, vorzugsweise 45° gegen die Werkstückebene beträgt.

3. Bandsäge nach Anspruch 1 oder 2, **dadurch gekennzeichnet, dass** der Sägetisch (6) mit dem Sandwichelement (7) außerhalb oder innerhalb des endlos umlaufenden Sägebandes (3) angeordnet ist.

4. Bandsäge nach einem der Ansprüche 1 bis 3, **dadurch gekennzeichnet, dass** die Sägebandführungen (5) als gleichsinnig um 180° verdrehbare Wendevorrichtungen ausgebildet sind.

5. Bandsäge nach einem der Ansprüche 1 bis 4, **dadurch gekennzeichnet, dass** das Sandwichelement (7) auf dem Sägetisch (6) in Bezug auf das Sägeband (3) winkelverstellbar und in der eingenommenen Schrägstellung feststellbar ist.

6. Bandsäge nach einem der Ansprüche 1 bis 5, **dadurch gekennzeichnet, dass** der Sägetisch (6) mit dem Sandwichelement (7) in Bezug auf das Sägeband (3) winkelverstellbar gelagert und in der eingenommenen Schrägstellung feststellbar ist.

7. Bandsäge nach einem der Ansprüche 1 bis 6, **dadurch gekennzeichnet, dass** dem Sägeband (3) eine in seinen Schnittbereich (4) führende Absaugvorrichtung (11) zugeordnet ist.

8. Bandsäge nach einem der Ansprüche 1 bis 7, **dadurch gekennzeichnet, dass** die Absaugvorrichtung (11) in dem sägebandauslaufseitigen Randbereich des Schnittbereiches (4) dem Sägeband (3) ein- oder beidseitig zugeordnete Absaughauben (12) oder -stutzen mit sich anschließenden Absaugkanälen (13) aufweist.

9. Bandsäge nach einem der Ansprüche 1 bis 8, **dadurch gekennzeichnet, dass** der dem Schnittbereich (4) abgewandten Sägebandrolle (2a) eine Absaughaube (12) oder ein Absaugstutzen mit einem sich anschließenden Absaugkanal (13) zugeordnet ist.

## Claims

1. A band saw for sectioning continuously fabricated sandwich elements having rigid cover layers and one core layer, said band saw comprising:
- a saw frame (1) having at least one upper and one lower saw band roller (2) for a saw band (3) revolving upon said saw band rollers (2) and having saw band guides (5) disposed on either side of a cutting area (4), and
- a guide means (10) for guiding the saw band (3) diagonally in the cutting area (4),
said guide means (10) prescribing an adjustable cutting angle (α),
**characterized in that**,
for adjusting the angle of the saw band (3), the upper and/or lower saw band roller (2) is adjustably carried within the saw frame (1) and is respectively lockable in the position it has been brought to.

2. The band saw according to claim 1, **characterized in that** the cutting angle (α) is of 30 to 60 degrees, preferably of 45 degrees relative to the plane of the workpiece.

3. The band saw according to claim 1 or 2, **characterized in that** the saw table (6) together with the sandwich element (7) are disposed outside or inside the endless revolving saw band (3).

4. The band saw according to one of the claims 1 through 3, **characterized in that** the saw band guides (5) are configured as reversible devices that are rotatable by 180 degrees in the same direction.

5. The band saw according to one of the claims 1 through 4, **characterized in that** the sandwich element (7) on the saw table (6) is angularly adjustable relative to the saw band (3) and is lockable in the inclined position it has been brought to.

6. The band saw according to one of the claims 1 through 5, **characterized in that** the saw table (6) with the sandwich element (7) is angularly adjustably carried relative to the saw band (3) and is lockable in the inclined position it has been brought to.

7. The band saw according to one of the claims 1 through 6, **characterized in that** the saw band (3) is assigned an exhaust system (11) leading into its cutting area (4).

8. The band saw according to one of the claims 1 through 7, **characterized in that**, in the border region of the cutting area (4) located on the exit side of the saw band, the exhaust system (11) is comprised of suction hoods (12) or nozzles that are assigned to one or both sides of the saw band (3) and are adjoined with suction channels (13).

9. The band saw according to one of the claims 1 through 8, **characterized in that** a suction hood (12) or a suction nozzle together with the adjoining suction channel (13) are assigned to the saw band roller (2a) that is turned away from the cutting area (4).

## Revendications

1. Scie à ruban pour sectionner des éléments sandwich fabriqués en continu et présentant des couches de recouvrement rigides et un noyau, cette scie comportant
- un bâti (1) avec au moins un galet supérieur et un galet inférieur (2) pour une lame à ruban (3) défilant sur les galets (2) avec des guides lame (5) disposés de chaque côté d'une zone de coupe (4), et
- un guide diagonal (10) pour guider la lame à ruban (3) dans la zone de coupe (4),
le guide diagonal (10) imposant un angle de coupe (α) réglable,
**caractérisée en ce que**,
pour régler l'angle de la lame à ruban (3), le galet (2) supérieur et/ou inférieur de la lame à ruban est supporté dans le bâti (1) de manière réglable et est verrouillable dans la position respective qu'il vient d'adopter.

2. Scie à ruban selon la revendication 1, **caractérisée en ce que**, par rapport au plan de la pièce à usiner, l'angle de coupe (α) est de l'ordre de 30 à 60°, de préférence de 45°.

3. Scie à ruban selon la revendication 1 ou 2, **caractérisée en ce que** la table (6) de la scie avec l'élément sandwich (7) est disposée à l'extérieur ou à l'intérieur de la lame à ruban (3) qui défile en continu.

4. Scie à ruban selon l'une quelconque des revendications 1 à 3, **caractérisée en ce que** les guides lame (5) sont conformés en forme de dispositifs réversibles susceptibles d'être retournés dans le même sens de 180°.

5. Scie à ruban selon l'une quelconque des revendications 1 à 4, **caractérisée en ce que** l'angle que fait l'élément sandwich (7) sur la table (6) par rapport à la lame à ruban (3) est réglable et que l'élément sandwich est apte à être verrouillé dans la position oblique qu'il vient d'adopter.

6. Scie à ruban selon l'une quelconque des revendications 1 à 5, **caractérisée en ce que** l'angle que fait la table (6) avec l'élément sandwich (7) par rapport à la lame à ruban (3) est réglable et que la table est apte à être verrouillée dans la position oblique qu'elle vient d'adopter.

7. Scie à ruban selon l'une quelconque des revendications 1 à 6, **caractérisée en ce que** la lame à ruban (3) est associée à un dispositif d'aspiration (11) débouchant dans sa zone de coupe (4).

8. Scie à ruban selon l'une quelconque des revendications 1 à 7, **caractérisée en ce que** le dispositif d'aspiration (11) comporte, dans la zone en bordure de la zone de coupe (4), du côté de la sortie de la lame à ruban, des capots (12) ou embouts d'aspiration prolongés par des canaux d'aspiration (13) et associés à la lame à ruban (3), sur un côté de celle-ci ou sur les deux.

9. Scie à ruban selon l'une quelconque des revendications 1 à 8, **caractérisée en ce qu'**un capot d'aspiration (12) ou un embout d'aspiration prolongé par un canal d'aspiration (13) est associé au galet (2a) de la lame à ruban qui est détourné de la zone de coupe (4).
